# FASCICULE DE BREVET EUROPEEN

(11) **EP 2 545 722 B1**
(45) Date de publication et mention de la délivrance du brevet: **29.04.2015**
(21) Numéro de dépôt: 11705581.4
(22) Date de dépôt: 28.02.2011
(51) Int. Cl.: H04W 12/08, H04L 29/06

(54) **DETECTION D'UN DEROUTEMENT D'UN CANAL DE COMMUNICATION D'UN DISPOSITIF DE TELECOMMUNICATION COUPLE A UN CIRCUIT NFC**
ERKENNUNG DER UMLEITUNG EINES KOMMUNIKATIONSKANALS EINER AN EINE NFC-SCHALTUNG ANGESCHLOSSENEN TELEKOMMUNIKATIONSVORRICHTUNG
DETECTION OF THE REROUTING OF A COMMUNICATION CHANNEL OF A TELECOMMUNICATION DEVICE CONNECTED TO AN NFC CIRCUIT

(30) Priorité: 09.03.2010 FR 1051694
(43) Date de publication de la demande: 16.01.2013
(73) Titulaire: Proton World International N.V., 1930 Zawentem (BE)
(72) Inventeur: HUQUE, Thierry, B-1367 Ramillies (BE); VAN NIEUWENHUYZE, Olivier, B-1970 Wezembeek-oppem (BE)
(74) Mandataire: de Beaumont, Michel
(86) Numéro de dépôt international: PCT/EP2011/052902
(87) Numéro de publication internationale: WO 2011/128142

(56) Documents cités:
- "Smart Cards; UICC - Contactless Front-end (CLF) Interface; Host Controller Interface (HCI) (Release 7); ETSI TS 102 622", ETSI STANDARD, EUROPEAN TELECOMMUNICATIONS STANDARDS INSTITUTE (ETSI), SOPHIA ANTIPOLIS CEDEX, FRANCE, vol. SCP-T, no. V7.4.0, 1 avril 2009 (2009-04-01), XP014043836,
- MARC PASQUET ET AL: "Payment with mobile NFC phones. How to analyze the security problems", INTERNATIONAL SYMPOSIUM ON COLLABORATIVE TECHNOLOGIES AND SYSTEMS (CTS 2008),, 1 février 2008 (2008-02-01), pages 1-8, XP007913609,

## Description

### Domaine de l'invention

La présente invention concerne de façon générale les transactions effectuées au moyen de dispositifs mobiles de télécommunication de type téléphone portable. L'invention s'applique plus particulièrement à de tels dispositifs équipés en outre d'un circuit de communication en champ proche (NFC - Near Field Communication).

### Exposé de l'art antérieur

De plus en plus, les téléphones mobiles sont équipés d'une interface de communication en champ proche qui leur permet de combiner des fonctions de transpondeur électromagnétique avec des fonctions de téléphonie mobile. En particulier, cela adjoint au dispositif mobile de télécommunication de type assistant personnel, téléphone mobile, Smartphone, etc., des fonctions d'émulation d'un transpondeur électromagnétique, de type carte sans contact ou lecteur de carte sans contact. Cela enrichit considérablement les fonctionnalités du dispositif mobile qui peut alors servir, par exemple, de porte-monnaie électronique, de dispositif de validation d'accès, de titre de transport, etc.

Pour émuler le fonctionnement d'une carte à puce sans contact, le dispositif mobile de télécommunication est équipé d'un circuit intégré d'émission-réception en champ proche (CLF - ContactLess Front-End) également désigné routeur NFC. Ce routeur est équipé d'une tête d'émission-réception radio-fréquence (RF) associée à une antenne à faible portée pour communiquer à la manière d'un transpondeur électromagnétique. Le routeur exploite les capacités du ou des processeurs de traitement du dispositif mobile pour les opérations de traitement et de mémorisation des données. Pour des applications de contrôle d'accès, de porte-monnaie électronique, de paiement, etc., on exploite un élément sécurisé permettant d'authentifier l'utilisateur. Cet élément sécurisé est soit intégré au dispositif mobile de télécommunication (circuit intégré dédié, circuit soudé à la carte de circuit imprimé), soit contenu dans un microcircuit porté par un module d'identification d'abonné (SIM - Subscriber Identification Module), ou tout autre carte amovible, par exemple au format standard d'une carte mémoire.

Un routeur NFC peut également être présent dans un dispositif mobile de type clé USB, dans un terminal de paiement bancaire, dans un dispositif adhésif (sticker), etc.

Une émulation d'une carte sans contact dans un dispositif mobile de télécommunication est susceptible d'engendrer des faiblesses du point de vue de la sécurité des transactions.

Il serait souhaitable de pouvoir détecter de telles faiblesses.

Il serait par ailleurs souhaitable d'éviter ces faiblesses afin de sécuriser les transactions.

La norme ETSI TS 102 622 V7.4.0 d'avril 2009 fixe différentes caractéristiques d'une interface de communication dans un module de sécurité d'un dispositif de télécommunication équipé d'un routeur de communication en champ proche.

### Résumé

Selon un premier aspect, un objet d'un mode de réalisation de la présente invention est de détecter une tentative de piratage d'un dispositif de télécommunication associé à un module de communication en champ proche.

Selon un autre aspect, un objet d'un mode de réalisation de la présente invention est de pallier tout ou partie des inconvénients des dispositifs mobiles de télécommunication associés à un module de transmission en champ proche.

Selon encore un autre aspect, un objet d'un mode de réalisation de la présente invention est d'améliorer la sécurité contre une tentative de piratage d'un module de sécurité de type module d'identification d'abonné, contenu dans un dispositif de télécommunication associé à un module de transmission en champ proche.

Pour atteindre tout ou partie des ces objets ainsi que d'autres, un mode de réalisation de la présente invention prévoit un procédé de détection d'une tentative de détournement d'un canal de communication entre un port d'un module de sécurité et un port d'un routeur de communication en champ proche présents dans un dispositif de télécommunication, dans lequel, à réception d'un message dans un format de communication en champ proche, le module de sécurité vérifie de quel port du routeur de communication provient ce message.

Selon un mode réalisation de la présente invention, une activité de périphériques connectés au routeur est surveillée par un microcontrôleur équipant le dispositif de télécommunication.

Selon un mode réalisation de la présente invention, le module de sécurité vérifie l'existence d'un canal de communication entre un port le connectant au routeur et un port connectant le routeur à un microcontrôleur du dispositif.

Selon un mode réalisation de la présente invention, le routeur communique au module de sécurité des informations sur le canal utilisé, lors de la réception par le module de sécurité de messages au format de communication en champ proche.

Selon un mode réalisation de la présente invention, les informations représentent une signature prenant en compte un identifiant du canal et des ports associés.

On prévoit également un module de sécurité destiné à un dispositif de télécommunication équipé d'un routeur de communication en champ proche, comportant des moyens adaptés à une mise en oeuvre du procédé de détection.

On prévoit également un dispositif de télécommunication équipé d'un routeur de communication en champ proche, comportant des moyens de mise en oeuvre du procédé de détection.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente schématiquement un dispositif mobile de télécommunication du type auquel s'applique à titre d'exemple la présente invention ;
la figure 2 est un schéma illustrant une fonction d'un module de transmission en champ proche du dispositif de la figure 1 ;
la figure 3 illustre, de façon très schématique, une attaque susceptible d'exploiter une faiblesse du dispositif de télécommunication de la figure 1 ;
la figure 4 illustre un mode de mise en oeuvre d'une phase préparatoire à une telle attaque ;
la figure 5 illustre un mode de réalisation d'un procédé de protection contre une telle attaque ;
la figure 6 illustre un autre mode de mise en oeuvre d'un procédé de protection contre l'attaque illustrée en figure 3 ; et
la figure 7 illustre une variante du mode de mise en oeuvre de la figure 6.

### Description détaillée

De mêmes éléments ont été désignés par de mêmes références aux différentes figures. Par souci de clarté, seuls les éléments et étapes utiles à la compréhension de l'invention ont été représentés et seront décrits. En particulier, les protocoles de codage et de communication, que ce soit pour les transmissions en champ proche ou pour les télécommunications en mode GSM, n'ont pas été détaillés, l'invention étant compatible avec les protocoles usuels. De plus, les circuits constitutifs du dispositif mobile de communication n'ont pas non plus été détaillés, l'invention étant là encore compatible avec les dispositifs usuels, pourvu que ceux-ci soient programmables.

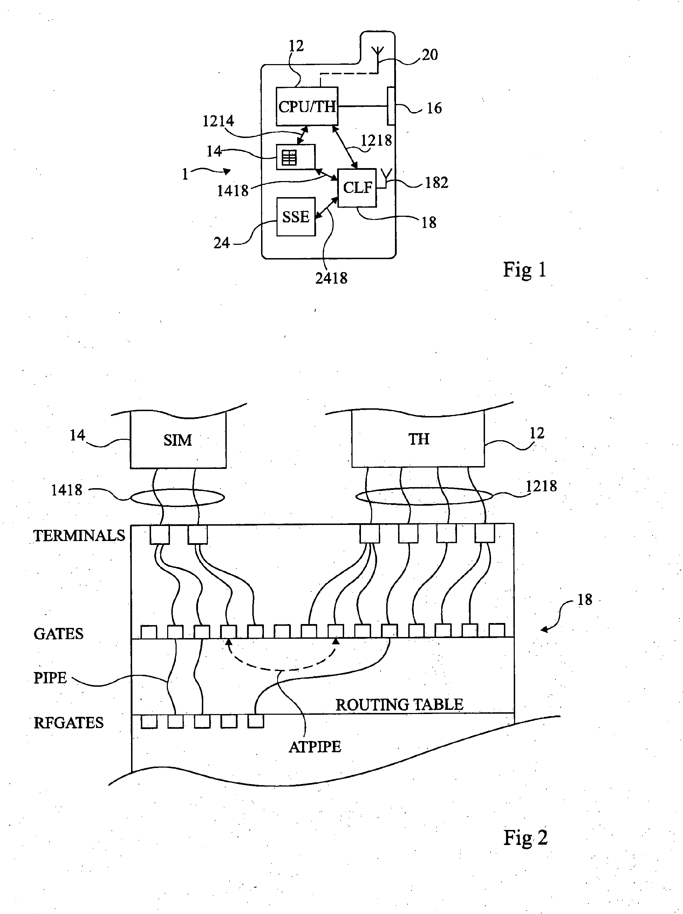

La figure 1 représente de façon très schématique un dispositif mobile de télécommunication (par exemple, un téléphone portable) du type auquel s'applique à titre d'exemple la présente invention. Les différents éléments d'interface avec l'utilisateur (clavier, écran, haut-parleur, etc.) n'ont pas été représentés, ces éléments n'étant pas modifiés par la mise en oeuvre des modes de réalisation qui vont être décrits.

Le dispositif 1 comporte une unité centrale de traitement 12 (CPU/TH) qui est constituée d'au moins un microprocesseur formant le coeur du dispositif. Ce microprocesseur est couramment désigné par son appellation anglo-saxonne Terminal Host. Pour le fonctionnement en télécommunication par l'intermédiaire d'un réseau (GSM, 3G, UMTS, etc.), ce microprocesseur exploite des informations d'identification et d'authentification fournies par un module d'identification d'abonné 14 (SIM) qui constitue un module de sécurité du dispositif. Le microprocesseur 12 est susceptible d'exploiter une ou plusieurs mémoires internes non représentées du téléphone. Le téléphone 1 peut également comporter un lecteur 16 de carte mémoire ou autres bus de communication avec l'extérieur pour charger, dans le téléphone, des données et/ou des applications.

Les dispositifs mobiles auxquels s'appliquent les modes de réalisation décrits combinent la fonction de télécommunication avec celle d'un système de transmission sans contact en champ proche (NFC). Pour cela, le dispositif 1 comporte un circuit 18 (CLF - ContactLess Front-End) constituant un module de communication en champ proche à la manière d'un transpondeur électromagnétique. Ce module 18 est associé à une antenne 182 distincte d'une antenne 20 destinée au réseau de téléphonie mobile. Le cas échéant, le circuit 18 est associé à un module de sécurité (SSE) 24 distinct de la carte SIM 14 et directement présent sur la carte de circuit imprimé du téléphone, ou porté par une carte amovible à microcircuit (par exemple, au format d'une carte mémoire). Le module 18 est également dénommé routeur NFC.

Les différents éléments du dispositif 1 communiquent selon différents protocoles. Par exemple, les circuits 12 et 18 communiquent par une liaison 1218 de type I2C ou SPI, la carte SIM 14 communique avec le microprocesseur 12 par une liaison 1214 conforme à la norme ISO 7816-3, de même que le circuit de sécurité 24 communique avec le routeur 18 selon cette norme par une liaison 2418. Le routeur 18 communique avec la carte SIM par exemple par un bus unifilaire 1418 (SWP - Single Wire Protocol). D'autres versions de protocoles et de liaisons sont bien entendu possibles.

Les modes de réalisation seront décrits en relation avec un téléphone GSM. L'invention s'applique toutefois plus généralement à tout dispositif de télécommunication adapté à un réseau mobile (par exemple, de type Wifi, Bluetooth, WiMax, etc.) et associé à un module de transmission sans contact (routeur NFC), par exemple, une clé USB, un terminal bancaire, un compteur de consommation d'énergie ou autre), un terminal de validation d'accès, de titres de transport, etc.

De même, on désignera par le terme routeur le module de communication en champ proche, car celui-ci intègre généralement dans un même circuit toutes les fonctions utiles à l'émulation d'une carte sans contact mais les modes de réalisation décrits s'appliquent à tout type de module NFC.

Le routeur 18 comporte des bornes physiques (TERMINALS) de raccordement des liaisons 1218, 1418 et 2418 et gère des ports logiques (GATES) d'affectation de ces bornes aux différentes fonctions liées aux communications en champ proche. Le routeur 18 inclut donc un processeur et des mémoires volatiles et non volatiles pour stocker, entre autres, une table de routage des différents ports logiques. Certains ports sont réservés à des fonctions d'administration du routeur et d'autres sont d'affectation libre par le routeur.

En fonctionnement, le routeur 18 met à disposition et gère différents canaux de communication avec les autres circuits 12, 14, 24, etc. du dispositif mobile pour leur donner accès aux fonctions de communication en champ proche, c'est-à-dire à des ports connectés à des circuits de transmission radiofréquence, désignés ports RF.

La figure 2 illustre de façon très schématique et sous forme de blocs, la fonction routage du routeur 18. Pour simplifier, la figure 2 est une représentation structurelle alors qu'en pratique, l'affectation des différents ports aux différents circuits du dispositif mobile est effectuée de façon logicielle par la table de routage.

Chacune des bornes (TERMINALS) du routeur se voit affectée un ou plusieurs ports (GATES). Dans l'exemple de la figure 2, on suppose que les liaisons physiques 1418 et 1218 de la carte SIM 14 et du microcontrôleur 12 sont connectées à des bornes du routeur 18 et que des ports (GATES) sont affectés à ces circuits. Plusieurs ports peuvent être affectés à un même circuit (ce qui est symbolisé en figure 2 par la connexion d'une même borne à plusieurs ports). La table de routage (ROUTING TABLE) du routeur 18 affecte certains ports à des fonctions internes (par exemple de configuration et d'administration), mais également ouvre des canaux (PIPE) entre certains ports affectés à la carte SIM ou au microcontrôleur RF, et des ports (RF GATES) inclus dans le module 18. Cela correspond à l'ouverture de canaux (PIPE) entre les circuits externes au routeur 18 et ses circuits de transmission RF pour la mise en oeuvre des différentes applications requérant une communication en champ proche. Par exemple dans des applications bancaires, de transports, de porte-monnaie électronique, d'accès, etc. requérant une identification ou authentification sécurisée de l'utilisateur, un ou plusieurs canaux sont ouverts entre le routeur et la carte SIM pour exploiter les informations sécurisées d'identification de l'utilisateur et valider la transaction.

L'intégration de routeurs NFC dans des dispositifs mobiles de télécommunication et le partage d'un même module de sécurité (carte SIM) engendre certaines faiblesses du point de vue de la sécurité.

On pourrait prévoir des outils d'authentification pour s'assurer que les liaisons entre le routeur et les différents circuits externes ne sont pas piratées. Toutefois, cela s'avère insuffisant face à une faiblesse que les inventeurs ont identifiée et qui sera décrite ci-après.

Le routeur 18 ou module NFC est généralement un seul circuit intégré et ses accès externes sont plutôt bien protégés contre d'éventuelles tentatives de piratage.

Jusqu'à présent, on s'est surtout préoccupé de garantir qu'une transaction en champ proche émulée par le dispositif mobile ne permette pas à un dispositif pirate interceptant la communication en champ proche d'exploiter des informations fournies par le module de sécurité.

Toutefois, un risque reste présent car le routeur 18 gère également un canal (ATPIPE symbolisé en pointillés en figure 2) de communication entre la carte SIM 14 ou tout autre module de sécurité, et le microcontrôleur 12 du dispositif mobile de télécommunication. Ce canal est normalement utilisé pour que la carte SIM 14 informe le microcontrôleur 12 qu'un message lui parvient par la liaison NFC. Toutefois, il est également possible de détourner cette utilisation pour faire croire au module de sécurité 14 qu'il communique avec le routeur pour une transaction en champ proche donc sur un canal avec les ports RF du téléphone alors qu'il est en fait en communication avec le microcontrôleur 12.

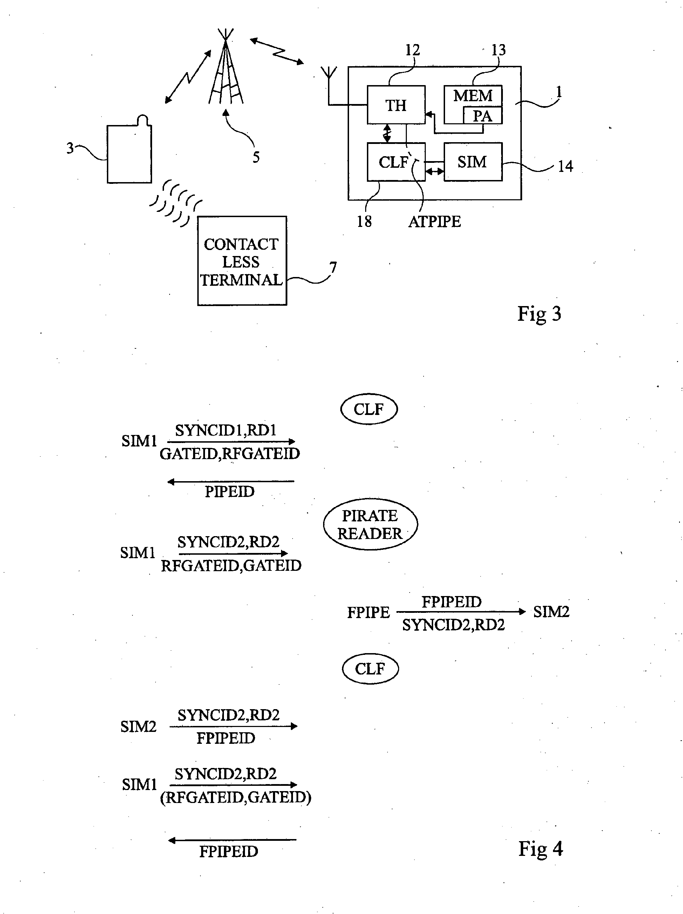

La figure 3 illustre, de façon très schématique et sous forme de blocs, l'exploitation possible d'un canal ATPIPE entre une carte SIM 14 et un microcontrôleur 12 d'un téléphone mobile 1.

On suppose que, dans une phase préparatoire à l'attaque, le téléphone GSM 1 a été piraté et qu'un canal ATPIPE a été détourné par l'intermédiaire du routeur 18 entre sa carte SIM 14 et son microcontrôleur 12. La table de routage du routeur 18 contient donc l'information de ce canal "dérouté". On suppose également qu'une application pirate (PA) a été stockée dans une mémoire 13 (MEM) du téléphone 1 et que cette application peut donner des instructions au microcontrôleur 12. Plusieurs modes de mise en oeuvre de la phase préparatoire seront exposés ultérieurement. L'utilisateur du dispositif 1, une fois celui-ci piraté par le chargement de l'application PA et par l'ouverture du canal ATPIPE, n'est pas en mesure, comme on le verra par la suite, de s'apercevoir d'un dysfonctionnement. Il utilise son téléphone de façon normale.

L'une des fonctions de l'application PA est de déclencher automatiquement une réponse du téléphone 1 suite à une requête provenant du réseau de télécommunication et émise par un autre dispositif mobile 3 en possession de l'attaquant. Le dispositif pirate est par exemple un autre téléphone GSM 3 qui utilise son propre module d'identification d'abonné pour communiquer via le réseau GSM (symbolisé par une antenne relais 5). Il peut s'agir également d'un micro-ordinateur associé à un modem GSM.

Dans l'exemple de la figure 3, le dispositif 3 est également équipé d'un routeur sans contact, par exemple pour initier des transactions en champ proche avec une borne 7 (par exemple, un terminal NFC ou tout autre borne de communication sans contact - CONTACTLESS TERMINAL). Par exemple, le dispositif 3 est utilisé pour réaliser un achat avec un paiement devant être validé par son routeur NFC.

Normalement, pour un tel paiement, le routeur du téléphone 3 gère un canal de communication avec le module d'identification d'abonné (ou un autre module de sécurité dédié) de ce téléphone pour authentifier l'utilisateur et valider le paiement.

Dans le mécanisme de la figure 3, au moment de la validation du paiement, le téléphone 3 utilise le réseau GSM pour demander au téléphone 1 de valider le paiement au moyen du module d'identification d'abonné de celui-ci. Par exemple, le dispositif 3 envoie un SMS par l'intermédiaire du réseau 5 qui, lorsqu'il est reçu par le téléphone 1 est traité par l'application pirate. Celle-ci simule des requêtes provenant des ports RF et les transmet par le canal ATPIPE, de sorte que le module d'identification 14 répond et valide la transaction. Cette validation est détournée par le microcontrôleur 12 et est renvoyée au dispositif 3 qui, à son tour, la transmet à son routeur NFC pour valider le paiement auprès du terminal 7. Il en découle que le paiement est débité à l'abonné du téléphone 1 et non à l'attaquant possédant le dispositif 3. Le plus souvent, une application sans contact ne requiert aucune interaction avec le terminal (7, figure 3) à l'exception d'une présentation du dispositif sans contact. En particulier, aucune saisie de code (PIN) n'est nécessaire pour une transaction en champ proche afin de ne pas rallonger les transactions, de sorte que le dispositif 3 peut pirater sans difficultés le dispositif distant 1.

Les contremesures prévoyant des chiffrements et/ou des signatures entre la borne 7 réclamant l'authentification et le module de sécurité sont inefficaces pour contrer cette attaque. En effet, les informations entre la borne 7 et le module 14 n'ont pas besoin d'être décodées. On a en fait établi un canal de communication entre le module 14 du téléphone 1 et la borne 7 via le réseau de télécommunication 5, de sorte que le module 14 se comporte comme s'il était en transaction en champ proche avec la borne 7.

Le même type de piratage peut intervenir pour des applications d'authentification ou de validation de passages, de type accès sécurisé.

De plus, cette attaque peut également prospérer même sans que le dispositif pirate 3 utilise son propre routeur NFC, par exemple utilise un mode de communication à contact, pourvu que l'authentification réclamée provienne d'un module de sécurité et respecte les formats et protocoles utilisés par le protocole NFC. En outre, une telle attaque peut servir à détourner n'importe quelle information du dispositif 1 au profit d'un système pirate (par exemple, les données dupliquant le contenu de la piste magnétique d'une carte dans une application au paiement bancaire).

En outre, l'attaque peut faire intervenir la carte SIM du téléphone mobile 1 ou tout autre module de sécurité (par exemple, le module 24), pourvu qu'un canal soit géré par le routeur 18 entre ce module et un circuit (généralement, le microcontrôleur 12) capable de gérer des communications sur le réseau 5.

Cette attaque de transactions en champ proche, exploitant le réseau de télécommunication, est due à la présence d'un canal de communication, via le routeur NFC, entre un module de sécurité et un microcontrôleur connecté à ce routeur.

La mise en oeuvre de l'attaque requiert une phase préparatoire dans laquelle il faut intervenir sur le téléphone 1 que l'on souhaite pirater. Cette préparation requiert une intervention plus ou moins importante selon le niveau de sécurité apporté par la carte SIM à la gestion des canaux de communication NFC.

Dans un mode de réalisation simplifié, le microcontrôleur est autorisé à créer un canal sur n'importe quel port libre. Dans ce cas, une application pirate chargée dans le microcontrôleur est susceptible d'ouvrir un canal à travers le routeur NFC jusqu'à la carte SIM. Si par la suite, la carte SIM n'effectue pas d'autre vérification que de constater que le format des requêtes correspond à un format de trame radiofréquence émanant d'un circuit NFC, l'application pirate peut attaquer la carte SIM.

Selon un autre mode de réalisation, le module de sécurité 14 est plus évolué et vérifie l'association entre les numéros de canaux ou de ses propres ports et les ports RF.

Dans un premier cas, on considère que la carte SIM 14 ne tient pas compte du circuit avec lequel le port est ouvert (donc qu'il peut s'agir d'un port destiné au microcontrôleur). Ce mode de mise en oeuvre exploite le fait que l'attribution des numéros (identifiants) de canaux est souvent séquentielle. On commence alors par demander au microcontrôleur de supprimer un canal entre la carte SIM est les ports RF. Puis, on provoque la création et l'ouverture d'un canal ayant le même identifiant entre le microcontrôleur et la carte SIM.

La figure 4 illustre un autre mode de mise en oeuvre d'une phase préparatoire de l'attaque visant à dérouter un canal entre le routeur 18 (CLF) et la carte SIM (SIM1) d'un utilisateur. Ce mode de mise en oeuvre est plus particulièrement destiné aux systèmes dans lesquels la carte SIM s'assure, avant de transmettre des informations vers le routeur CLF, qu'elle a bien contrôlé l'ouverture du canal de communication avec celui-ci.

On exploite ici le fait que, préalablement à l'initialisation du dispositif 1, la carte SIM vérifie si elle s'est déjà trouvée en présence du routeur 18. Si ce n'est pas le cas, elle reconfigure les canaux entre ses ports et le routeur NFC.

Dans un fonctionnement normal, lors d'une première connexion de la carte SIM1 dans le téléphone 1, la carte provoque l'ouverture, au niveau de la couche dite de transport, d'au moins un canal de communication, identifié SYNCID1, avec le routeur CLF. Pour cela, la carte SIM1 envoie au routeur CLF à la fois une donnée SYNCID1 de synchronisation et un nombre quelconque (typiquement un nombre aléatoire RD1). Le nombre RD1 est stocké dans le routeur CLF et sert à la carte 14 pour vérifier qu'elle a déjà provoqué une ouverture de canal avec ce routeur. A chaque initialisation, la carte vérifie l'existence du numéro RD1 dans routeur. Au niveau applicatif, la carte demande au routeur l'ouverture d'un canal entre un de ses ports, identifié GATEID et l'un des ports RF, identifié RFGATEID. Le routeur ouvre alors un canal et lui attribue un identifiant PIPEID et, à la fois, le stocke dans la table de routage et le communique à la carte SIM1. A chaque fois qu'une donnée est demandée par le routeur, la carte SIM1 vérifie que l'identifiant PIPEID du canal est correct.

Pour mettre en place l'attaque le pirate doit disposer pendant un laps de temps du téléphone mobile 1 et de la carte SIM1. Cela est relativement facile, par exemple, en se faisant prêter le téléphone mobile pour soi-disant passer un appel, ou en utilisant frauduleusement un téléphone lors d'une intervention de maintenance, par exemple, dans un magasin de téléphonie mobile.

Avec la carte SIM1 et le téléphone muni du routeur 1, le fraudeur commence par introduire la carte SIM1 dans un dispositif pirate (PIRATE READER), par exemple, un autre téléphone mobile dont le microcontrôleur est capable d'exécuter un programme de piratage respectant les fonctions décrites, ou. un ordinateur équipé d'un lecteur de carte et qui simule un routeur. La carte SIM1 n'ayant jamais rencontré le routeur NFC du dispositif pirate ou émulé par celui-ci, elle génère un nouvel identifiant de synchronisation SYNCID2. Elle renvoie des identifiants de ports RFGATEID et GATEID pour l'ouverture de canaux correspondants. Le routeur pirate attribue alors, à au moins une paire de ports, un canal FPIPEID qui correspond à une passerelle entre le routeur et un port externe du microprocesseur au lieu d'associer le port GATEID à un port RF. L'identifiant FPIPEID est alors chargé dans une carte SIM2 falsifiée ainsi que les identifiants SYNCHID2 et RD2. La carte SIM2 contient alors une table de routage associant, au canal FPIPEID, les ports RFGATEID et GATEID.

Puis, cette carte SIM2 est introduite dans le téléphone 1. Les identifiants SYNCID2 et RD2 sont alors transférés au routeur CLF 18 pour l'ouverture du canal FPIPEID entre des ports désignés GATEID et RFGATEID. Cela revient à modifier la table de routage du routeur pour que lorsque le canal entre les ports GATEID et RFGATEID est appelé, le canal affecté est le canal FPIPEID au lieu de PIPEID.

L'attribution du canal FPIPEID peut prendre diverses formes en fonction de la façon avec laquelle les canaux sont attribués aux ports dans le routeur. Par exemple, on passe par une phase d'observation de l'affectation des canaux en plaçant la carte SIM2 dans le routeur pour observer la méthode d'affectation des canaux, avant d'introduire la carte SIM2 dans le lecteur pirate.

On replace enfin la "vraie" carte SIM1 dans le téléphone 1. Comme le routeur CLF connaît les identifiants RD2 et SYNCID2, la carte considère "connaître" le routeur et ne provoque pas la réouverture de canaux avec celui-ci. Lorsque la carte SIM1 demande une communication vers le port RFGATEID, le routeur utilise le canal FPIPEID qui a été attribué.

Le terminal GSM a bien été piraté c'est-à-dire qu'un canal FPIPE (ou ATPIPE, figure 2) a été ouvert entre un port GATEID de la carte SIM et un port du microcontrôleur 12, alors que la carte SIM1 croit que ce canal relie son port GATEID au port RFGATEID. Ce canal peut alors être détourné pour un accès à distance par le réseau GSM depuis un autre terminal (figure 3). Le téléchargement de l'application pirate PA peut s'effectuer soit ultérieurement soit en même temps que la génération du canal pirate.

Diverses possibilités existent en fonction du dispositif 1 en présence. Par exemple, on peut lire la table de routage. Si cela n'est pas possible, on peut lors du passage de la carte SIM1 dans le lecteur pirate, émuler un fonctionnement de circuit CLF, afin d'obtenir la configuration complète stockée dans cette carte. On peut également utiliser une carte pirate SIM2 ou un émulateur de carte pour, dans le téléphone valide 1, extraire les informations de la table de routage.

On voit donc qu'il est possible de paramétrer un détournement d'un canal de communication entre un module de sécurité et un routeur NFC pour établir un canal entre ce module et le microprocesseur du téléphone, externe au routeur NFC.

Pour que l'utilisateur du téléphone 1 ne s'aperçoive pas du piratage, même lorsqu'il utilise son mode sans contact, l'application pirate doit comporter la fonction de rediriger le canal FPIPE vers les circuits RF du routeur lorsqu'une requête d'information vers la SIM est émise par le routeur 18.

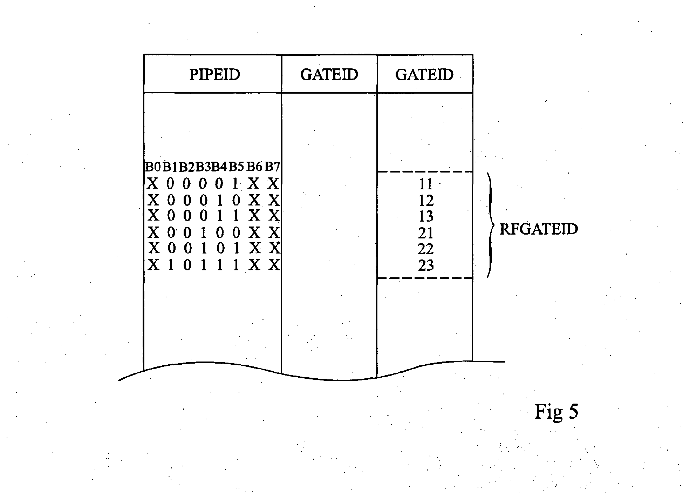

La figure 5 représente un exemple de table de routage d'un routeur 18 selon un mode de réalisation d'un procédé de protection d'un dispositif de communication contre des attaques telles que décrites ci-dessus.

Cette figure illustre un exemple d'enregistrements d'une table de routage du routeur 18. De façon usuelle, la table met en correspondance un identifiant de canal PIPEID avec deux identifiants de ports GATEID entre lesquels le canal est ouvert. Les ports dont on souhaite s'assurer qu'ils ne sont pas détournés sont les ports de l'interface radiofréquence RFGATEID.

Selon ce mode de réalisation, chaque identifiant de canal dépend de l'identifiant de port. Par exemple, chaque identifiant comporte une première partie fixe (en figure 5, de gauche à droite et en notant B0 à B7, les bits B1 à B5), identifiant le port de l'interface RF et une seconde partie (par exemple les bits B6 et B7) attribuée dynamiquement "xx" lors de la génération. Dans cet exemple, on considère que le premier bit B0 n'est pas utilisé.

Ainsi, la carte SIM peut toujours vérifier si les bits d'identification du canal incluent les bits d'identification d'un des ports de l'interface RF. Cet identifiant est fixe pour un routeur donné.

Pour la mise en oeuvre de ce mode de réalisation, le module de sécurité doit connaître la règle de création des identifiants de canaux, de façon à pouvoir déterminer l'identifiant du port avec lequel le canal va être ouvert.

On pourra prévoir une fonction de combinaison plus complexe qu'une simple juxtaposition de bits, pourvu que cette fonction soit injective. On pourra à l'inverse prévoir une fonction plus simple où l'identifiant de canal PIPEID correspond à l'identifiant de port RF RFGATEID.

De plus, tous les ports du routeur ne sont pas nécessairement pris en considération. Il faut cependant qu'au moins les ports de l'interface RF soient protégés.

En cas d'attaque, soit le dispositif pirate ne respecte pas la règle de génération et l'identifiant FPIPEID attribué par le routeur ne marche pas, soit il connaît et respecte la fonction de génération et le canal ne sera alors pas détourné.

Le cas échéant, les identifiants varient d'un routeur à un autre (par exemple associant un nombre dépendant du numéro d'identification ou de série du circuit). Dans ce cas, les identifiants des ports doivent être communiqués à toute carte SIM introduite dans le téléphone.

Selon un autre mode de réalisation dérivé du précédent, la vérification est effectuée par le microcontrôleur et non par le module de sécurité. Un avantage est alors que la protection est compatible avec les cartes SIM existantes. Toutefois, le programme de vérification dans le microcontrôleur doit être protégé pour ne pas être contournable par une application pirate.

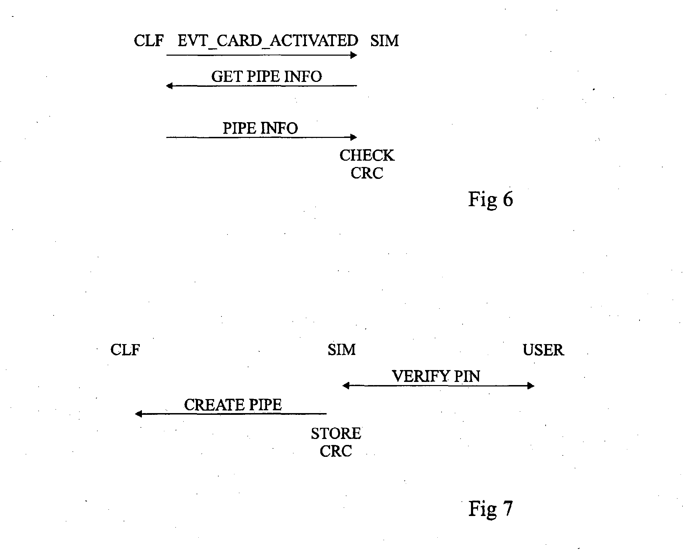

Les figures 6 et 7 illustrent un autre mode de réalisation visant à protéger un dispositif de télécommunication équipé d'un routeur NFC. La figure 6 illustre les échanges entre le routeur et la carte SIM pour que la carte accepte de transmettre des informations au routeur. La figure 7 illustre les échanges entre le routeur et la carte SIM pour l'ouverture de canaux.

Selon ce mode de réalisation, le code PIN de l'utilisateur USER (figure 7) associé au module de sécurité est vérifié (VERIFY PIN) pour chaque modification de la table de routage. Par conséquent, la phase préparatoire à l'attaque (par exemple, celle exposée en relation avec la figure 4) n'est pas possible dans la mesure où l'utilisateur n'est pas là pour taper son code PIN lors de la génération de l'identifiant de canal détourné. Dans l'exemple de la figure 7, la requête d'ouverture d'un canal (CREATE PIPE) est transmise par la carte SIM au routeur 1 en envoyant les identifiants GATEID et RFGATEID.

Dans un mode de réalisation simplifié, seule cette validation d'une modification de la table de routage (ou une autorisation de modifier cette table) par une saisie du code PIN est mise en oeuvre.

De préférence, une signature (par exemple un code CRC) prenant en compte au moins l'identifiant RFGATEID et l'identifiant du destinataire, généralement désigné DestHostId.

Comme l'illustre la figure 6, à chaque demande d'information, généralement désignée EVT_CARD_ACTIVATED, du routeur CLF vers la carte SIM, celle-ci demande au routeur (GET PIPE INFO) de lui fournir des informations sur le canal (en particulier les identifiants des ports PIPE INFO en relation). Puis, elle calcule une valeur courante de la signature pour la comparer (CHECK CRC) au code de référence qu'elle contient. La carte ne fournit les informations (donc ne valide la transaction) que si le code CRC est valide. Par conséquent, si la table de routage a été modifiée par un dispositif pirate, la signature sera différente et la carte pourra le repérer. En variante, la signature courante est calculée par le routeur et transmise à la carte SIM pour vérification.

Dans un mode de réalisation simplifié, si le temps dévolu à la vérification le permet, on peut prévoir une lecture de la table de routage par la carte SIM et une comparaison directe d'un enregistrement qu'elle contient de cette table.

Selon une autre variante, le module de sécurité se contente de vérifier la signature de la table de routage pour autoriser une fourniture d'information. Cette variante est cependant moins sûre car elle ne s'accompagne pas de la saisie du code d'authentification de l'utilisateur.

La signature de référence est, de préférence, calculée et stockée par la carte SIM (figure 7, STORE CRC) lors de la requête d'ouverture de canal sur la base des identifiants qu'elle transmet au routeur et de l'identifiant de canal que celui-ci lui retourne. En variante, la signature de référence est calculée par le routeur lors de la modification et est fournie à la carte SIM pour stockage. Un avantage d'un calcul par la carte SIM est que la mise en oeuvre de la contremesure ne requiert alors aucune modification du routeur. Il suffit de modifier le programme de la carte SIM pour, non seulement qu'elle demande le code PIN avant de provoquer une ouverture de canaux, mais également qu'elle conditionne l'envoi d'informations à une vérification de signature.

Selon une variante de réalisation, le mécanisme de vérification n'est pas mis en oeuvre à chaque demande d'échange d'information entre la carte SIM et le routeur NFC, mais uniquement à l'initialisation ou démarrage (boot) du dispositif mobile.

On notera que la plupart des dispositifs équipés d'un routeur NFC doivent avoir la capacité de fonctionner même lorsqu'ils sont éteints, c'est-à-dire en étant téléalimentés par une borne de lecture dans le champ de laquelle ils se trouvent. Cela ne constitue pas une faiblesse dans les solutions préconisées ci-dessus. En effet, lorsque le dispositif 1 est éteint, son microcontrôleur est également éteint. Il n'y a donc pas de risque d'avoir une communication pirate par le réseau GSM pour valider un achat distant.

Il est possible de détecter qu'un dispositif mobile de communication et plus particulièrement sa carte SIM ou son routeur NFC sont vulnérables à l'attaque décrite ci-dessus en la mettant en oeuvre.

Selon un autre aspect, on prévoit de modifier le routeur et le module de sécurité pour qu'ils détectent une attaque par détournement de canal telle décrite ci-dessus.

Par exemple, le microcontrôleur surveille l'activité des périphériques connectés au routeur afin de détecter un envoi du microcontrôleur au routeur CLF qui précèderait immédiatement une demande d'information vers la SIM.

Selon un autre exemple, à chaque réception d'un message RF (provenant du routeur NFC), la carte SIM s'assure du routage en interrogeant le routeur. Un tel mode de réalisation requiert une modification du routeur pour lui adjoindre une fonction ou instruction provoquant l'envoi d'information sur le routage (détail des ports associé à un canal). On peut également prévoir de faire calculer au routeur une signature (par exemple, un code CRC) de chaque association canal-ports (de leurs identifiants) pour en permettre la vérification par la carte SIM.

La détection d'une tentative d'attaque peut être suivie de toute contre-mesure adaptée. Par exemple, une alerte sonore et/ou visuelle est transmise à l'utilisateur. Selon un autre exemple, la détection d'une attaque provoque une réinitialisation du dispositif de télécommunication ou du routeur. Selon encore un autre exemple, la fourniture d'information par la carte SIM est empêchée.

Il est par ailleurs possible de vérifier qu'un des modes de réalisation de la contre-mesure a été mis en oeuvre en tentant l'une des attaques, de préférence l'attaque la plus élaborée (figure 4), et en regardant si elle échoue ou si elle réussit.

Divers modes de réalisation ont été décrits. Diverses variantes et modifications apparaîtront à l'homme de l'art. En particulier, le mécanisme de signature de la table de routage pourra être associé à un mécanisme d'authentification des échanges entre la carte SIM et le routeur NFC.

Enfin, la mise en oeuvre pratique de l'invention que ce soit par des moyens matériels ou logiciels est à la portée de l'homme du métier à partir des indications fonctionnelles données ci-dessus.

## Revendications

1. Procédé de détection d'une tentative de détournement d'un canal de communication entre un port (GATE) d'un module de sécurité (14) et un port (RFGATE) d'un routeur de communication en champ proche (18) présents dans un dispositif de télécommunication (1), **caractérisé en ce qu'**à réception d'un message dans un format de communication en champ proche, le module de sécurité vérifie de quel port du routeur de communication provient ce message.

2. Procédé selon la revendication 1, dans lequel une activité de périphériques connectés au routeur (18) est surveillée par un microcontrôleur (12) équipant le dispositif de télécommunication.

3. Procédé selon la revendication 1, dans lequel le module de sécurité (14) vérifie l'existence d'un canal de communication entre un port le connectant au routeur (18) et un port connectant le routeur à un microcontrôleur (12) du dispositif.

4. Procédé selon la revendication 1, dans lequel le routeur (18) communique au module de sécurité (14) des informations sur le canal utilisé, lors de la réception par le module de sécurité de messages au format de communication en champ proche.

5. Procédé selon la revendication 4, dans lequel les informations représentent une signature prenant en compte un identifiant du canal et des ports associés.

6. Module de sécurité (14) destiné à un dispositif de télécommunication (1) équipé d'un routeur (18) de communication en champ proche, comportant des moyens adaptés à une mise en oeuvre du procédé conforme à l'une quelconque des revendications 1 et 3 à 5.

7. Dispositif de télécommunication (1) équipé d'un routeur (18) de communication en champ proche, comportant des moyens de mise en oeuvre du procédé conforme à l'une quelconque des revendications 1 à 5.

## Patentansprüche

1. Ein Verfahren zum Detektieren des Versuchs einer Umleitung eines Kommunikationskanals zwischen einem Gate (GATE) eines Sicherheitsmoduls (14) und einem Gate (RFGATE) eines Nahfeld-Kommunikationsrouters (18), die in einer Telekommunikationseinrichtung (1) vorhanden sind, **dadurch gekennzeichnet, dass** beim Empfang einer Nachricht in einem Nahfeld-Kommunikationsformat das Sicherheitsmodul verifiziert, von welchem Gate des Kommunikationsrouters die Nachricht stammt.

2. Verfahren nach Anspruch 1, wobei eine Aktivität von Peripheriegeräten, die mit dem Router (18) verbunden sind, durch einen Mikrocontroller (12), der Telekommunikationseinrichtung überwacht wird.

3. Verfahren nach Anspruch 1, wobei das Sicherheitsmodul (14) die Existenz eines Kommunikationskanals zwischen einem Gate, das es mit dem Router (18) verbindet und einem Gate, das den Router mit einem Mikrocontroller (12) der Einrichtung verbindet, verifiziert.

4. Verfahren nach Anspruch 1, wobei der Router (18) zu dem Sicherheitsmodul (14) Daten bezüglich des verwendeten Kanals kommuniziert, und zwar beim Empfang von Nachrichten in dem Nahfeld-Kommunikationsformat durch das Sicherheitsmodul.

5. Verfahren nach Anspruch 4, wobei die Daten eine Signatur repräsentieren, die einen Identifizierer des Kanals und der assoziierten Gates in Betracht zieht.

6. Sicherheitsmodul (14), das für eine Telekommunikationseinrichtung (1), die mit einem Nahfeld-Kommunikationsrouter (18) ausgerüstet ist, vorgesehen ist, das Mittel aufweist, die in der Lage sind, das Verfahren nach einem der Ansprüche 1 und 3 bis 5 zu implementieren.

7. Telekommunikationsvorrichtung (1), die mit einem Nahfeld-Kommunikationsrouter (18) ausgerüstet ist, und die Mittel aufweist, die in der Lage sind, das Verfahren nach einem der Ansprüche 1 bis 5 zu implementieren.

## Claims

1. A method for detecting an attempt to divert a communication pipe between a gate (GATE) of a security module (14) and a gate (RFGATE) of a near field communication router (18) present in a telecommunication device (1), **characterized in that**, on reception of a message in a near field communication format, the security module verifies from which gate of the communication router the message originates.

2. The method of claim 1, wherein an activity of peripherals connected to the router (18) is monitored by a microcontroller (12) equipping the telecommunication device.

3. The method of claim 1, wherein the security module (14) verifies the existence of a communication pipe between a gate connecting it to the router (18) and a gate connecting the router to a microcontroller (12) of the device.

4. The method of claim 1, wherein the router (18) communicates to the security module (14) data relative to the pipe used, on reception by the security module of messages in the near field communication format.

5. The method of claim 4, wherein the data represent a signature taking into account an identifier of the pipe and of the associated gates.

6. A security module (14) intended for a telecommunication device (1) equipped with a near field communication router (18), comprising means capable of implementing the method of any of claims 1 and 3 to 5.

7. A telecommunication device (1) equipped with a near field communication router (18), comprising means capable of implementing the method of any of claims 1 to 5.
